# EUROPEAN PATENT SPECIFICATION

(11) **EP 1 223 814 B1**
(45) Date of publication and mention of the grant of the patent: **13.07.2011**
(21) Application number: 00975949.9
(22) Date of filing: 26.10.2000
(51) Int. Cl.: A23C 19/032, A23C 19/06, C12N 1/16, C12N 1/20

(54) **METHOD FOR THE PREPARATION OF ATTENUATED STARTER CULTURES**
VERFAHREN ZUR HERSTELLUNG VON ABGESCHWÄCHTEN STARTERKULTUREN
PROCEDE DE PREPARATION DE CULTURES STARTER ATTENUEES

(30) Priority: 28.10.1999 EP 99203556
(43) Date of publication of application: 24.07.2002
(73) Proprietor: DSM IP Assets B.V., 6411 TE Heerlen (NL)
(72) Inventor: LORTAL, Sylvie, F-35000 Rennes (FR); KLEIN, Nathalie, F-57200 Sarreguemines (FR)
(74) Representative: Matulewicz, Emil Rudolf Antonius
(86) International application number: PCT/EP2000/010626
(87) International publication number: WO 2001/030171

(56) References cited:
- CA-A- 2 072 159
- JOHNSON J A C ET AL: "PROPERTIES OF LACTOBACILLUS HEVETICUS CNRZ-32 ATTENUATED BY SPRAY-DRYING, FREEZE-DRYING, OR FREEZING" JOURNAL OF DAIRY SCIENCE,US,AMERICAN DAIR SCIENCE ASSOCIATION. CHAPAIGN, ILLINOIS, vol. 78, no. 4, 1 January 1995 (1995-01-01), pages 761-768, XP002038916 ISSN: 0022-0302 cited in the application
- MUIR D D ET AL: "SENSORY CHANGES DURING MATURATION OF FAT-REDUCED CHEDDAR CHEESE: EFFECT OF ADDITION OF ENZYMICALLY ACTIVE ATTENUATED STARTER CULTURES" MILCHWISSENSCHAFT,DE,VV GMBH VOLKSWIRTSCHAFTLICHER VERLAG. MUNCHEN, vol. 47, no. 4, 1 January 1992 (1992-01-01), pages 218-222, XP000270511 ISSN: 0026-3788

## Description

### Field of the invention

The present invention relates to a process for the preparation of attenuated starter cultures and the use of these cultures in, for example, the production of cheese, cheese analogues or cheese-derived products.

### Background of the invention

Cheese ripening is a time-consuming process involving complex and well-balanced reactions between glycolysis, proteolysis and lipolysis of milk components. Whatever cheese is considered, bacterial enzymes play a major role in this process. The proteases, peptidases, esterases, and the enzymes of amino acid catabolism in the lactic acid bacteria involved in these processes have been extensively studied (Law, J. and Haandrikman, A., 1997, International Dairy Journal 7: 1-11).

It is well known that changing the bacterial enzyme content in cheese directly affects the rate of cheese ripening and its final flavour. One of the most efficient ways to increase the bacterial enzyme pool in cheese curd, without altering the primary starter and the type of cheese , is to add whole lactic acid bacteria, which are unable to grow and to produce a significant quantity of lactic acid, but which can still deliver active ripening enzymes during cheese ageing. These starter cultures are normally weakened and are called "attenuated". The preparation of attenuated starter cultures can be achieved by various treatments like heating, freezing, spray drying, freeze-drying, fragilisation using lysozyme or solvents, or by the selection of lactose negative mutants.

The first preparation and use of attenuated starter cultures as a cheese additive was reported in 1975 by Pettersson and Sjöström (Pettersson, H. and Sjöström, G., 1975, Journal of Dairy Research 42, 313-326). At that time, their main purpose was to accelerate proteolysis and shorten ripening time, which was of great economic interest. Today, in most developed countries, milk is of such high hygienic quality that the problem is not only to shorten the ripening time but also to improve the flavour.

The most widely studied method for the preparation of attenuated starter cultures is heat-treatment. This attenuation method is based on sub-lethal heat-treatment of a bacterial cell suspension. The attenuated cells are then added to cheese milk along with the primary starter culture. It was shown that heat-treatment destroyed or delayed the acidification ability of the cells for several hours. Therefore the attenuated starter cultures do not significantly modify the acidification course of the curd, and subsequently the fat/moisture, and pH of the cheese. Most often, the loss of lactic acid production closely follows the loss of viability (Pettersson and Sjöström, 1975, ibid.).

In CA 2072 159 a method was disclosed to accelerate the maturation of cheddar cheese by using live and heat-attenuated *L*. *casei.*

Although there is still little agreement on which heat-treatment procedure is best, in most cases proteolysis and lipolysis were increased, leading to a reduced ripening time and improved flavour (bitterness reduction).

However, a critical point for heat attenuation remains in that the correct temperature/time combination must be defined so that acidification is eliminated or delayed without excessively denaturing potential ripening enzymes (e.g. proteases, peptidases, esterases, or others). Furthermore, the very narrow difference between adequate and excessive heat treatments remains a major practical problem (Castaneda, R., Vassal, L., Gripon, J. and Rousseau, M., 1990, Netherland Milk and Dairy Journal 44, 49-52).

Alternative methods for attenuation have also been described, for example attenuation by freezing-thawing (Johnson, J. A. C., Etzel, M. R., Chen, C. M. and Johnson, M. E., 1995, Journal of Dairy Science 78, 769-776), by lysozyme treatment (EP 02 46 163), by the use of solvents or by spray- and freeze-drying (Johnson, J. A. C. and Etzel, M.R, 1995, Journal of Dairy Science 78, 761-768).

Despite promising results in cheese, the industrial use of attenuated starters is not widespread. The main reason for this is the empirical character of the attenuation methods which have been proposed so far.

The present invention seeks to solve some of the problems encountered in prior art processes, by providing a novel process for the preparation of attenuated starter cultures which is reproducible and well-balanced. Furthermore, the process of the invention is rapid and simple and it can be carried out easily and at low cost on an industrial scale.

### Summary of the invention

The present invention discloses a process for the preparation of an attenuated starter culture as defined in the claims, which process comprises exposing cells of at least one strain in a starter culture as defined in the claims to microwave radiation. Attenuated starter cultures of the invention can be used in, for example, production of cheese, cheese analogues or cheese-derived products.

The invention also provides:
- A process for the preparation of a cheese, a cheese analogue as a cheese-derived product which process comprises contacting a cheese, a cheese analogue or a cheese-derived product or a precursor thereof with an attenuated starter culture of the invention; and

In a particular embodiment, the starter culture can be exposed to from 1000 to 30000 Joule of microwave radiation. Preferably cells can be treated for from 5 to 30 seconds at a power of from 200 to 1000 Watts (Joule/s), or most preferably for 15 to 20 seconds at from 300 to 650 Watts per 10ml of an aqueous composition for example a suspension containing ≈10⁹ cells / ml.

Preferably, attenuated starter cultures comprise cells that have been treated with microwave radiation in such a way that the viability of the attenuated starter culture is less than 20%, more preferably from between 1 and 10%, as compared to untreated starter cultures when measured in CFU/ml. Furthermore, preferably the killed cells are not lysed. Typically the same time, the treated cells retain their enzyme activity. In general, more than 50%, more preferably more than 90% of the enzyme activity of the attenuated starter culture is maintained. The activity of one enzyme, in particular preferably peptidase, present in the attenuated starter culture is more than 90% as compared to the activity in untreated cells, as can be determined via the method indicated in Example 2. This peptidase activity is used as indication for the whole enzyme activity present in treated cells.

Ripening enzymes can be chosen from the group containing: proteases. peptidases, decarboxylases, amine oxidases, alcohol dehydrogenases, amino acid dehydrogenases, amino acid oxidases, amino transferases or transaminases.

Attenuated starter cultures can contain cells belonging to one or more of the strains selected from the group of species consisting of *Lactobacillus, Lactococcus, Streptococcus. Corynebacterium, Biridabacterium. Micrococci* and yeasts.

An attenuated starter culture of the invention may be in a concentrated form and optimally may also be in a frozen form. Such attenuated starter cultures may be prepared by carrying out the process of the invention for the preparation of an attenuated starter culture and subsequently concentrating the resulting attenuated starter culture, optionally followed by freezing.

### Detailed description of the invention

In the present invention a process for the preparation of an attenuated starter culture using microwave radiation as defined in the claims is described.

The use of microwaves is well known in the art for killing cells in food preparations From these studies it has been concluded that the exposure of cells to microwave radiation results in inactivation of microorganisms. While an inhibitory effect of microwave radiation on the viability of microorganisms is established, the question how microwave radiation brings about that effect has been a matter of discussion. It is most likely that the effect is of a thermal character. However, experiments performed by Rosenberg and co-workers revealed that microwave treatment resulted in a loss of viability at a rate which was higher than that obtained with conventional heating alone (Rosenberg, U. and Sinell. H.J.. 1989. Zentralbl. Hyg. Umweltmed. 188:271-283). This suggests the co-existence of a so-called "athermal effect" during microwave treatment as well. This hypothesis is strengthened by the fact that recent studies have shown that microwave treatment at reduced temperatures (below 40°C) also results in decreased viability of microorganisms (Kozempel, M.F., et a/. J. food Prot., 1998, 61:582-585). This is likely to be due to the fact that bacterial DNA, RNA and proteins absorb microwaves of specific frequencies which results in genetic and protein disorders (Webb, S.J., Nature, 1969, 222: 1199-1200).

Taking the thermal and athermal effect together it can be concluded that microwave treatment can not be seen simply as an equivalent to heat treatment. On the contrary, its destructive action on cells does not favour the use of microwaves as a method to generate attenuated starter cultures with high intact enzyme activity.

Surprisingly, the present invention discloses that a treatment of cells whereby cells are exposed to microwave radiation (also indicated as the "microwave treatment") shows to be very favourable for the attenuation of starter cultures which can be used in, for example, cheese making. The reason for this is that the microwave treatment of the present invention appears to have a wider gap between adequate and excessive treatments, as compared to attenuation by conventional heat treatment. Furthermore, this simple and rapid method results in the appearance of cells with low viability and high enzyme activity, is highly reproducible and can be applied to concentrated cell suspensions. making it highly suitable for low cost use and continuous use on an industrial scale.

By the term starter culture we mean a particular strain of bacterium or yeast, or a combination of one or more species or strains from one or more genera, which by growing and metabolising, assist in the manufacture of the product, for example, by formation of taste, flavour and/or texture. For example, dairy starter cultures can contain lactic acid bacteria that grow and metabolise in milk and curd and assist in the production of mature cheese. Also starter cultures can be used in the production of meat and derivatives thereof.

By the term cheese we mean a dairy product belonging to a soft cheese variety such as Camembert, Münster or Livarot, to a semi-hard variety such as Tome de Savoie, Gouda, Edam or Mimolette or to a hard cheese variety such as Cheddar, Gruyere or the Swiss cheeses or Parmesan.

By the term cheese analogue we mean a product composed of dairy proteins such as casein, caseinate, whey protein concentrate coagulated by acidification or by heat-treatment, or a combination of both, to which cheese-flavouring agents are added.

By the term cheese-derived product we mean either a processed cheese, i.e. a preheated mixture of cheeses, butter or other fatty materials, melting salts or any type of cheese curds to which enzymes are added in order to give desired texture- and flavouring properties.

By the term precursor we mean a substance that is present In the process of the invention which will ultimately become a cheese, a cheese analogue or a cheese-derived product. Thus a precursor could be milk, butter or cheese curds for example.

In the present invention, attenuated starter cultures can comprise lactic acid bacteria, which are highly affected in their ability to grow (i.e. their viability) and to produce significant quantities of lactic acid but which are still capable of delivering active ripening enzymes during cheese ageing.

Attenuated starter cultures can comprise lactic acid bacteria or any other type of cells that have been treated in such a way that the viability of the attenuated starter culture is less than 20%, more preferably less than 10%, most preferably less than 1%, as compared to an untreated starter culture as measured in CFU/ml. Preferably more than 50%, more preferably more than 90% of the activity of the ripening enzymes in an attenuated starter culture is retained as compared to an untreated starter culture. Aminopeptidase activity can be used to determine how much activity is retained (see example 2).

Attenuation can be performed on bacterial or fungal starter cultures. Preferably, *Lactobacillus, Lactococcus. Streptococcus, Corynebacterium, Bifidobacterium. Micrococci* or yeast species can be used. Most preferably, *L*. *helvelicus, L. lactis, L. casei, L. plantarum, L. acidophilus, L. delbrueckii, L. bulgaricus, S. thermophilus. L lactis ssp. cremoris, K lactis* or *B. linens* can be used.

Ripening enzymes are enzymes involved in the formation of taste, texture and/or flavour of cheese, cheese analogues, cheese-derived products and/or processed cheese. Formation of taste, flavour and texture involves complex and well-balanced reactions between glycolysis, proteolysis and lipolysis of the milk components and further degradation of amino acids into amines, keto-acids. aldehydes, ketones, alcohols, esters, acid and sulfur compounds by a cascade of enzymatic reactions. Preferred ripening enzymes can be proteases (for example serine-, cysteine-, aspartic-, and/or metallo-endopeptidases), peptidases (for example amino-, carboxy-, di-, dipeptidyl-, tripeptidyl-, serine-type carboxy-, metallocarboxy-, cysteine-type carboxy-, and/or omega peptidases), decarboxylases (for example lysine-, arginine- and/or histidine decarboxylase), amine oxidases. aldehyde dehydrogenases, alcohol dehydrogenases, amino acid dehydrogenases, amino acid oxidases, amino transferases or transaminases.

Preferably, the microwave treatment is carried out using a microwave or the like. Preferably, a conventional household microwave(oven) is used. For attenuation at an irradiation frequency of 2450 MHz, the microwave power can range from 10-1800W. More preferably, at a power of between from 300W to 650W, the duration of the treatment can be from 5 to 30 sec.

This treatment is especially suitable in case the starter cultures are present in an aqueous environment e.g. are suspended in water. In case the starter cultures are in dried form (e.g. freeze dried) or in a concentrated state (10 to 40 w% dry matter) the skilled will appreciate that the microwave treatment conditions will have to be adjusted to obtain the desired state of killed, but not lysed. Most preferably, conditions for the microwave-treatment are chosen which result in at least 90%, more preferably 99% of the cells in the starters culture being killed but not lysed. while in general more than 50%, more preferably 90% of the activity of ripening enzymes is retained. Viability can be measured in, for example, CFU/ml (CFU = Colony Forming Unit) by plating a dilution of the attenuated cells on suitable MRS or YEG agar plates. Lysis can be determined by, for example, conventional methods using microscopy. Activity of ripening enzymes can be determined, for example, as described for peptidase in Example 2. Of course, all attenuation protocols in which a microwave-treatment is used in combination with an alternative attenuation treatment forms part of this invention.

We have found that in the *killed but not lysed" state of the starter culture alcohol formation or acidification were prevented and the flavour related enzymes were still active. So, the disadvantages of the starters were reduced because the starter cultures were catabolitically inactive, whereas the enzymes present were available for the cheese making process.

Another aspect of present invention provides a method for making cheese, cheese analogues and/or cheese-derived products with the said attenuated starter cultures

The following examples are only to be considered as illustration of the present invention.

### Example 1

### Killing of starter cultures using microwave radiation

Killing activity of a conventional household microwave of 2450 MHz frequency on *Lactobacillus helveticus* strain CNRZ-32 (available from INRA-collection, Institut National de la Recherche Agronomique, Gouy-en-Josas, France) and *Kluyveromyces lactis* strain 2166 (ATCC No. 8585) was investigated by exposing the cells to 300 W and 650 W microwaves for different lengths of time. Thus, cells were cultured in 1 litre of appropriate (MRS for *L*. *helveticus* and YEG for *K. lactis*) medium and in the required (37°C, unstirred for *L*. *helveticus ;* 30°C, stirred for *K*. *lactis*) conditions until an OD650 of 1 and 2 for *L*. *helveticus* and *K. lactis* respectively (about 5x10⁸ to 10⁹ cells/ml) was reduced. Cells were harvested in the early exponential stage under sterile conditions and washed twice with distilled water. Pellets were resuspended in 100 ml of sterile distilled water and divided into portions of 10 ml in test tubes. Test tubes were placed in a water bath at 20°C until treatment.

Microwave treatment was carried out by placing the one glass test tube containing 10 ml of cell suspension in an almost horizontal position onto two beakers of different size. At a power of 650 Watts the following timepoints were measured: 5, 10, 15, 20 and 25 sec. At a power of 300 Watts, cells were radiated for 15, 20, or 30 sec. After treatment test tubes were placed in a water bath again at 20° C for 10 min before determination of the killing rate. Viability was measured by plating the cells onto MRS (a medium for cultivating lactobacilli, the reference is "de Man JC, Rogosa M., and Sharpe E., 1960. A medium for cultivation of lactobacilli. J. appl. Bacteriol., 23, 130-135) or YEG (YEG = yeast extract 10g/l; bacto pepton 20g/l; dextrose 20g/l; pH6.5) plates. Also lysis of cells was monitored by microscopy. Table 1 shows the effect of the different microwave treatments on the viability of the two strains in log CFU/ml. A decrease in viability with a 2 log factor could be obtained for both cell types within 20 sec at a power of 650 W, and within 30 sec at 300 W.

**Table 1: shows the viability of Lactobacillus helveticus and Kluyveromyces lactis after microwave radiation applied for different lengths of time (t=0 to t=30 seconds) at different power levels (300W and 650W). The viability is given in CFU/ml.**

| Organism | Power | T=0 | t=5 | t=10 | t=15 | t=20 | t=30 |
|---|---|---|---|---|---|---|---|
| *K. lactis* | 650W | 8.7 | 8.9 | 8.5 | 5.6 | 4.3 | - |
| *L. helveticus* | 650W | 8.6 | 8.6 | 8.6 | 8.4 | 4.5 | - |
| *K. lactis* | 300W | 8.7 | - | - | 8.6 | 8.5 | 5.1 |
| *L. helveticus* | 300W | 8.6 | - | - | 8.4 | 7.7 | 5.3 |

### Example 2

### Determination of intracellular peptidase activity after attenuation of starter cultures by microwave treatment

The impact of attenuation by microwave treatment on proteolytic activity was systematically followed by measuring the increase in free amino groups during proteolytic degradation of β-casein by an attenuated cell-free extract. Since the proteolytic activity measurements as described by Doi and co-workers (Doi et al 1981, Anal. Biochem. 118, 173-184) could not properly be carried out in whole cells, cell-free extracts were prepared, which were subsequently exposed to microwave radiation. It is reasonably expected that the enzyme activity as measured in radiated cell free extracts is an underestimation of the enzyme activity that would be present after radiating whole cells.

Cell free extracts were prepared by disruption of the cells at 1000 Bars in a refrigerated French press. Undisrupted cells and cell debris were removed by centrifugation and the collected supernatant was filter-sterilised. The protein content of the cell free extracts was determined according to Lowry. (Lowry O.H., Rosebrouch N.J., Farr A.L., and Randall R.J., 1951. Protein measurement with the Folin phenol reagent. J. Biol. Chem., 193, 265-275)

β-Casein was purified from milk by methods known in the art [PCT/FR 91/00506] and subsequently partially hydrolysed using endoproteases trypsin (EC.3.4.21.4) and chymotrypsin (EC.3.4.21.1) until a hydrolysis degree of 16% was obtained as measured by free amino -group determination as described by Doi and co-workers (Doi et al .1981, Anal. Biochem. 118, 173-184). The peptide mixture obtained in this way contained 34 different peptides with molecular weights ranging from 373 to 3864 D as determined by mass spectrometry.

Proteolytic degradation of the β-casein peptide mixture was performed by incubating 1ml of 0.7 mg/ml beta-casein together with 125 µg of cytoplasmic protein of *L*. *helveticus* or *K. lactis* at 24°C in a buffer of 50 mM sodium phosphate at pH 5.7. Samples were taken after 10 or 24 hours, after which the increase in free amino groups was measured as described by Doi [Doi *et al.* 1981, ibid].

It was thus shown that the microwave treatment had no significant effects on the peptidase activity of *K*. *lactis ,* whereas the peptidase activity of *L*. *helveticus* had dropped with 16%. Furthermore, the release of intracellular constituents during the microwave treatment was determined (not shown) and found to be non-significant.

**Table 2: Release of free amino groups (in mM) during the kinetic degradation (t=0. t=10 and t=24 hours) of a β-casein hydrolysate by microwave-treated cell free extracts from Lactobacillus helveticus and Kluyveromyces lactis.**

| Organism | Microwave treatment | t=0 hours | t=10 hours | t=24 hours |
|---|---|---|---|---|
| *K. lactis* | Control | 0.43 | 1.73 | 2.68 |
| *K. lactis* | 13 sec. at 650W | 0.48 | 1.57 | 2.52 |
| *K. lactis* | 25 sec. at 300W | 0.47 | 1.58 | 2.57 |
| *K. lactis* | 30 sec. at 300W | 0.48 | 1.71 | 2.57 |
| *L. helveticus* | Control | 0.36 | 2.38 | 3.5 |
| *L. helveticus* | 17 sec. at 650W | 0.35 | 2.27 | 3.3 |
| *L. helveticus* | 25 sec. at 300W | 0.33 | 2.27 | 3.39 |
| *L. helveticus* | 30 sec. at 300W | 0.29 | 1.71 | 2.94 |

## Claims

1. A process for the preparation of an attenuated starter culture, the process comprising exposing cells of at least one strain in a starter culture to microwave radiation in such a way that the viability of that strain in the starter culture is less than 20% as compared to an untreated strain, as measured in CFU/ml and the cells retain their enzyme activity.

2. A process according to claim 1, wherein the exposure to microwave radiation is such that the cells of the at least one strain in the starter culture are killed but not lysed.

3. A process according to claim 1, wherein the viability of the at least one strain in the starter cultures is less than 10%, as measured in CFU/ml.

4. A process according to any one of the preceding claims, wherein the exposure to microwave radiation is from 1000 to 30000 Joule per 10 ml of an aqueous composition which comprises the calls of the at least one strain.

5. A process according to claim 4, wherein the exposure to microwave radiation is from 5 to 30 seconds at a power of from 200 to 1000 Joule/s, preferably the exposure to microwave radiation is from 15 to 20 seconds at a power of from 300 to 650 Joule/s.

6. A process according to any one of the preceding claims, wherein there are cells in the attenuated starter culture capable of expressing a ripening enzyme.

7. A process according to claim 6, wherein the ripening enzyme is a protease, a peptidase, a decarboxylase, an amine oxidase, an aldehyde dehydrogenase, an alcohol dehydrogenase, an amino add dehydrogenase, an amino add oxidase, an amino transferase or a transaminase.

8. A process according to claim 7, wherein the peptidase activity of the attenuated starter culture is more than 50% compared to that of a non-attenuated starter culture, preferably is more than 90% compared to that of a non-attenuated starter culture.

9. A process according to any one of the preceding claims, wherein the cells present in the attenuated starter culture are *Lactobacillus, Lactococcus. Streptococcus, Micrococci, Corynebacterium, Bifidobacterium* or yeast cells or any combination thereof.

10. A process according to any one of the preceding claims which process further comprises concentrating the starter culture before or after it has been exposed to microwave radiation.

11. A process according to claim 10 which further comprises freezing the starter culture after concentrating and exposure to microwave radiation.

12. A process for the preparation of a cheese, a cheese analogue or a cheese derived product, which process comprises preparing an attenuated starter culture according to a process according to any one of claims 1-11 and contacting a cheese, a cheese analogue or a cheese-derived product or a precursor thereof with the attenuated starter culture.

## Patentansprüche

1. Verfahren für die Herstellung einer abgeschwächten Starterkultur, wobei das Verfahren das Exponieren von Zellen von mindestens einem Stamm in einer Starterkultur einer Mikrowellenstrahlung umfasst, in einer Weise, so dass die Lebensfähigkeit des Stamms in der Starterkultur weniger als 20 % beträgt im Vergleich zu einem unbehandelten Stamm, wie in CFU/ml gemessen, und die Zellen ihre Enzymaktivität beibehalten.

2. Verfahren gemäß Anspruch 1, wobei die Exposition an Mikrowellenstrahlung in einer Weise erfolgt, so dass die Zellen des mindestens einen Stamms in der Starterkultur abgetötet, aber nicht lysiert werden.

3. Verfahren gemäß Anspruch 1, wobei die Lebensfähigkeit des mindestens einen Stamms in der Starterkultur weniger als 10 %, wie in CFU/ml gemessen, beträgt.

4. Verfahren gemäß einem beliebigen der vorhergehenden Ansprüche, wobei die Exposition an Mikrowellenstrahlung 1 000 bis 30 000 Joule pro 10 ml einer wässrigen Zusammensetzung beträgt, welche die Zellen des mindestens einen Stamms umfasst.

5. Verfahren gemäß Anspruch 4, wobei die Exposition an Mikrowellenstrahlung 5 bis 30 Sekunden lang bei einer Leistung von 200 bis 1 000 Joule/s erfolgt, vorzugsweise die Exposition an Mikrowellenstrahlung 15 bis 20 Sekunden bei einer Leistung von 300 bis 650 Joule/s erfolgt.

6. Verfahren gemäß einem beliebigen der vorhergehenden Ansprüche, wobei Zellen in der abgeschwächten Starterkultur zum Exprimieren eines Reifungsenzyms fähig sind.

7. Verfahren gemäß Anspruch 6, wobei das Reifungsenzym eine Protease, eine Peptidase, eine Decarboxylase, eine Aminoxidase, eine Aldehyddehydrogenase, eine Alkoholdehydrogenase, eine Aminosäuredehydrogenase, eine Aminosäureoxidase, eine Aminotransferase oder eine Transaminase ist.

8. Verfahren gemäß Anspruch 7, wobei die Peptidaseaktivität der abgeschwächten Starterkultur mehr als 50 % im Vergleich mit derjenigen einer nicht abgeschwächten Starterkultur beträgt, vorzugweise mehr als 90 % im Vergleich mit derjenigen einer nicht abgeschwächten Starterkultur beträgt.

9. Verfahren gemäß einem beliebigen der vorhergehenden Ansprüche, wobei die in der abgeschwächten Starterkultur vorhandenen Zellen *Lactobacillus, Lactococcus, Streptococcus, Micrococci, Corynebacterium, Bifidobacterium* oder Hefezellen oder jegliche Kombination davon sind.

10. Verfahren gemäß einem beliebigen der vorhergehenden Ansprüche, wobei das Verfahren weiterhin das Konzentrieren der Starterkultur umfasst, bevor oder nachdem sie an Mikrowellenstrahlung exponiert wurde.

11. Verfahren gemäß Anspruch 10, weiterhin umfassend das Einfrieren der Starterkultur nach dem Konzentrieren und der Exposition an Mikrowellenstrahlung.

12. Verfahren für die Herstellung eines Käses, eines Käseanalogons oder eines von Käse abgeleiteten Produkts, wobei das Verfahren das Herstellen einer abgeschwächten Starterkultur gemäß einem Verfahren gemäß einem beliebigen der Ansprüche 1 - 11 und das Kontaktieren eines Käses, eines Käseanalogons oder eines von Käse abgeleiteten Produkts oder einer Vorstufe davon mit der abgeschwächten Starterkultur umfasst.

## Revendications

1. Procédé de préparation d'une culture starter atténuée, le procédé comprenant l'exposition de cellules d'au moins une souche dans une culture starter à un rayonnement micro-onde de manière telle que la viabilité de cette souche dans la culture starter soit inférieure à 20% par rapport à une souche non traitée, telle que mesurée en UFC/ml, et que les cellules conservent leur activité enzymatique.

2. Procédé selon la revendication 1, dans lequel l'exposition au rayonnement micro-onde est telle que les cellules de la au moins une souche dans la culture starter sont tuées mais ne sont pas lysées.

3. Procédé selon la revendication 1, dans lequel la viabilité de la au moins une souche dans la culture starter est inférieure à 10%, telle que mesurée en UFC/ml.

4. Procédé selon l'une quelconque des revendications précédentes, dans lequel l'exposition au rayonnement micro-onde va de 1000 à 30 000 joules pour 10 ml d'une composition aqueuse qui comprend les cellules de la au moins une souche.

5. Procédé selon la revendication 4, dans lequel l'exposition au rayonnement micro-onde va de 5 à 30 secondes à une puissance allant de 200 à 1000 joules/s, de préférence l'exposition au rayonnement micro-onde va de 15 à 20 secondes à une puissance allant de 300 à 650 joules/s.

6. Procédé selon l'une quelconque des revendications précédentes, dans lequel il existe des cellules dans la culture starter atténuée qui sont capables d'exprimer une enzyme de mûrissement.

7. Procédé selon la revendication 6, dans lequel l'enzyme de mûrissement est une protéase, une peptidase, une décarboxylase, une amine oxydase, une aldéhyde déshydrogénase, une alcool déshydrogénase, une acide aminé déshydrogénase, une acide aminé oxydase, une aminotransférase ou une transaminase.

8. Procédé selon la revendication 7, dans lequel l'activité peptidase de la culture starter atténuée est supérieure à 50% par rapport à celle d'une culture starter non atténuée, et de préférence est supérieure à 90% par rapport à celle d'une culture starter non atténuée.

9. Procédé selon l'une quelconque des revendications précédentes, dans lequel les cellules présentes dans la culture starter atténuée sont des cellules de *Lactobacillus, Lactococcus, Streptococcus, Micrococci, Corynebacterium, Bifidobacterium* ou de levure, ou une association quelconque de celles-ci.

10. Procédé selon l'une quelconque des revendications précédentes, lequel procédé comprend en outre la concentration de la culture starter avant ou après son exposition au rayonnement micro-onde.

11. Procédé selon la revendication 10, qui comprend en outre la congélation de la culture starter après la concentration et l'exposition au rayonnement micro-onde.

12. Procédé de préparation d'un fromage, d'un analogue de fromage ou d'un produit dérivé de fromage, lequel procédé comprend la préparation d'une culture starter atténuée selon un procédé selon l'une quelconque des revendications 1-11 et la mise en contact d'un fromage, d'un analogue de fromage ou d'un produit dérivé de fromage ou d'un précurseur de celui-ci avec la culture starter atténuée.
